(19) Europäisches Patentamt
European Patent Office
Office européen des brevets

(11) **EP 1 850 349 A1**

(12) **EUROPEAN PATENT APPLICATION**

(43) Date of publication:
**31.10.2007 Bulletin 2007/44**

(51) Int Cl.:
***G12B 21/06*** *(2006.01)* ***G02B 5/00*** *(2006.01)*

(21) Application number: **07007879.5**

(22) Date of filing: **18.04.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **27.04.2006 JP 2006123587**

(71) Applicant: **Olympus Corporation Tokyo 151-0072 (JP)**

(72) Inventors:
• **Fukushima, Ikutoshi Fuchu-shi Tokyo 183-0042 (JP)**

• **Hirata, Tadashi Hachioji-shi Tokyo 193-0842 (JP)**
• **Fujiwara, Masato Hachioji-shi Tokyo 192-0023 (JP)**

(74) Representative: **von Hellfeld, Axel Wuesthoff & Wuesthoff Patent- und Rechtsanwälte Schweigerstrasse 2 81541 München (DE)**

(54) **Imaging apparatus**

(57)    An imaging apparatus (1) includes an illumination light source (2) emitting illumination light, a small-diameter image-transmitting portion (3), a distal end (3a) of which is placed near a specimen, an objective lens (4) converging the illumination light ($L_1$) to a proximal end (3b) of the image-transmitting portion (3), a light-detecting portion (5) that detects light returned from the specimen (A) via the image-transmitting portion (3) and the objective lens (4), and a shield portion (9) partially blocking the illumination light, the shield portion being disposed at near a pupil position (B) of the objective lens (4) or near a position optically conjugate with the pupil position so as to cover the illumination light path on one side in a radial direction. With this configuration, a sharp image with low noise can be obtained by preventing the occurrence of reflection at the proximal end (3b) of the image-transmitting portion (3) and also by avoiding autofluorescene from being produced.

**EP 1 850 349 A1**

**Description**

BACKGROUND OF THE INVENTION

1. FIELD OF THE INVENTION

The present invention relates to an imaging apparatus, and more specifically to an imaging apparatus having a small-diameter image-transmitting portion at the forward end thereof for direct observation of an internal tissue from a living body in a medical or biological field.

This application is based on Japanese Patent Application No. 2006-123587, the content of which is incorporated herein by reference.

2. DESCRIPTION OF RELATED ART

Examples of this type of imaging apparatus are disclosed in Japanese Translation of PCT International application, Publication No. 2005-512746 and also in the specification of U.S. Patent No. 6370422. These imaging apparatuses are configured so as to eliminate a disadvantage that a portion of illumination light reflected at the incident end of a small-diameter image-transmitting portion is combined with signal light as noise, the illumination light being emitted from an illumination light source and converged by an objective lens. In these imaging apparatuses, more specifically, a flat glass plate which has undergone anti-reflection treatment is affixed to the incident end (proximal end) face of the small-diameter image-transmitting portion, or an oil having an index of refraction matching that of the small-diameter image-transmitting portion is filled in the space between the objective lens and the incident end of the small-diameter image-transmitting portion.

However, the flat glass plate disposed on the incident end of the small-diameter image-transmitting portion or the oil used in the space between the incident end and the objective lens brings about a drawback that autofluorescene is produced in the flat glass plate or in the oil upon incidence of illumination light on the small-diameter image-transmitting portion, in the case when the illumination light is excitation light. Since fluorescence light returning from a specimen is of low intensity, the effect that the autofluorescene is overlapped as noise on images obtained by the imaging apparatus is not negligible. An imaging apparatus containing oil also has problems that handling of oil is a cumbersome task and makes an observation procedure complicated.

BRIEF SUMMARY OF THE INVENTION

The present invention has been made to address the above problems with the object being to provide an imaging apparatus capable of producing sharp images with low noise by preventing the occurrence of reflection at an proximal end of a small-diameter image-transmitting portion and also by avoiding autofluorescene from being produced.

In order to attain the above object, the present invention provides the following means. An imaging apparatus according to a first aspect of the invention includes an illumination light source configured to emit illumination light, a small-diameter image-transmitting portion, the distal end of which is placed near a specimen, an objective lens configured to converge the illumination light emitted from the illumination light source to the proximal end of the small-diameter image-transmitting portion, a light-detecting portion that detects light returned from the specimen via the small-diameter image-transmitting portion and the objective lens, and a shield portion partially blocking the illumination light, the shield portion being disposed at near a pupil position of the objective lens or near a position optically conjugate with the pupil position so as to cover the illumination light path on one side in a radial direction with respect to the optical axis of the objective lens.

According to the first aspect of the present invention, the illumination light emitted from the illumination light source is converged onto the proximal end of the small-diameter image-transmitting portion. A part of the converged illumination light is reflected at the proximal end, while the rest of the converged illumination light enters the small-diameter image-transmitting portion from the proximal end thereof. The illumination light entering the small-diameter image-transmitting portion propagates therethrough, and is emitted from the distal end that is placed near a specimen for irradiating the specimen. Fluorescence light emitted from the specimen returns through the small-diameter image-transmitting portion and the objective lens to be detected by the light-detecting portion; an image of the specimen can be obtained on the basis of detected signals.

Since the shield portion is disposed at a pupil position of the objective lens or near the position optically conjugate with the pupil position, only illumination light that is not blocked by the shield portion can be incident to the proximal end of the small-diameter image-transmitting portion. Also, since the shield portion is located on one side in a radial direction with respect to an optical axis of the objective lens, illumination light passing another side in the radial direction with respect to the optical axis is converged onto the proximal end of the small-diameter image-transmitting portion without being blocked by the shield portion.

Consequently, a considerable part of the illumination light reflected at the proximal end of the small-diameter image-transmitting portion is blocked by the shield portion located on one side in a radial direction with respect to the optical axis of the objective lens, and is not brought to an optical path incident to the light-detecting portion. It becomes possible to substantially reduce the amount of the reflected illumination light being incident to the light-detecting portion by disposing the shield portion so as to cover more than one side area in a radial direction of the optical path.

According to the first aspect of the present invention, thus, a portion of the illumination light reflected at the proximal end of the small-diameter image-transmitting portion can be eliminated without disposing a flat glass plate on the proximal end or filling the space between the end and the objective lens with an oil. Therefore, even in the case when the illumination light is excitation light, a drawback can be avoided such that autofluorescene is produced in the area near the proximal end of the small-diameter image-transmitting portion, and as a result, sharp images with low noise can be obtained.

In the first aspect of the present invention, it is preferable that the proximal end of the small-diameter image-transmitting portion is formed so as to be inclined at a predetermined angle with respect to the plane orthogonal to the optical axis of the small-diameter image-transmitting portion, and located at a position coincident with the focal plane of the objective lens. It is also preferable that the inclination of the proximal end is set so that the optical axis of fluorescence light emitted from the proximal end passes through an area not covered with the shield member disposed at near the pupil position of the objective lens or near the position optically conjugate therewith.

By this arrangement, the light reflected at the proximal end of the small-diameter image-transmitting portion can be effectively blocked, while generation of autofluorescene is suppressed; simultaneously, the fluorescence light returned from the specimen is delivered to the light-detecting portion without being blocked by the shield member, which enables bright images to be obtained.

Furthermore, it is preferable that the following inequality condition is satisfied when the numerical aperture of the objective lens is denoted as $NA_{OB}$, the numerical aperture of the small-diameter image-transmitting portion (fiber) is denoted as $NA_{FIBER}$, and the light shielding percentage of the light shielding plate is denoted as $\alpha$%.

$$0.8 < (1-\alpha/100) \times NA_{OB}/NA_{FIBER}, < 1.5$$

If the value of the expression in the above condition is smaller than 0.8, signal light from the small-diameter image-transmitting portion is also blocked by the light shielding plate, which results in lowering of S/N ratio. Conversely, if the value of the expression in the above condition is larger than 1.5, it becomes difficult to take excitation light (illumination light) from the objective lens into the small-diameter image-transmitting portion, and the intensity of the illumination light would have to be strengthened to compensate, which would result in increasing dispersion of light from the end of the small-diameter image-transmitting portion and lowering of S/N ratio.

According to a second aspect of the present invention, an imaging apparatus is provided that includes an illumination light source emitting illumination light, a small-diameter image-transmitting portion, the distal end of which is placed near a specimen, an objective lens converging the illumination light emitted from the illumination light source to the proximal end of the small-diameter image-transmitting portion, a light-detecting portion that detects light returned from the specimen via the small-diameter image-transmitting portion and the objective lens, an oscillating portion that varies the relative position of the objective lens and the proximal end of the small-diameter image-transmitting portion along the optical axis, and an image composing portion that composes an fluorescence image on the basis of information on relative positions of the objective lens and the proximal end of the small-diameter image-transmitting portion in the optical axis direction and optical signal on the specimen detected by the light-detecting portion; wherein, the proximal end of the small-diameter image-transmitting portion is formed so as to be inclined at a predetermined angle with respect to the plane orthogonal to the optical axis of the small-diameter image-transmitting portion and is positioned so as to be also inclined with respect to the focal plane of the objective lens.

According to the second aspect of the present invention, the illumination light emitted from the illumination light source is converged onto the proximal end of the small-diameter image-transmitting portion. A part of the converged illumination light is reflected at the proximal end, while the rest of the converged illumination light is incident to the small-diameter image-transmitting portion from the proximal end thereof. The illumination light incident to the small-diameter image-transmitting portion propagates therethrough, and is emitted from the distal end that is placed near a specimen for irradiating it. Fluorescence light emitted from the specimen returns through the small-diameter image-transmitting portion and the objective lens to be detected by the light-detecting portion.

In this arrangement, since the proximal end of the small-diameter image-transmitting portion, onto which illumination light is converged by the objective lens, is inclined with respect to the focal plane of the objective lens, reflected light of the illumination light reflected from the proximal end can be directed so as not to be incident on the objective lens even without a shield portion being provided.

Also, since the proximal end of the small-diameter image-transmitting portion, onto which illumination light is converged by the objective lens, is inclined with respect to the focal plane of the objective lens, the objective lens focuses the illumination light only at a point on the straight line at which the proximal end of the small-diameter image-transmitting portion and the focal plane of the objective lens cross each other. According to the second aspect of the present invention, the relative positions of the objective lens and the.proximal end of the small-diameter image-transmitting portion are varied along the optical axis by operation of the oscillating portion; thereby, the focal plane of the objective lens can be shifted on the proximal end in a direction intersecting the optical axis, and any point of predetermined area on the end can be focused upon by the objective lens.

Accordingly, only the fluorescence light emitted from focused points of predetermined area on the proximal end of the small-diameter image-transmitting portion is captured, and the optical signal on the specimen obtained is accumulated by an image composing portion; a sharp image of the specimen can be thus composed. It is noted that, in the first and second aspects of the present invention, the small-diameter image-transmitting portion may be an optical fiber or a rod lens of gradient index type.

The present invention provides effects such that a sharp image with low noise can be composed by preventing the occurrence of reflection at an proximal end of a small-diameter image-transmitting portion and also by avoiding autofluorescene from being produced.

BRIEF DESCRIPTION OF THE SEVERAL VIEWS OF THE DRAWINGS

FIG. 1 shows a schematic overall configuration of an imaging apparatus according to a first aspect of the present invention.

FIG. 2 shows a schematic overall configuration of an imaging apparatus modified from that shown in FIG. 1.

FIG. 3 shows a schematic overall configuration of an imaging apparatus according to a second aspect of the present invention.

FIG. 4 shows a schematic overall configuration of an imaging apparatus according to a third aspect of the present invention.

FIG. 5 shows a schematic overall configuration of an imaging apparatus modified from that shown in FIG. 4.

FIG. 6 shows a schematic overall configuration of an imaging apparatus according to a fourth aspect of the present invention.

DETAILED DESCRIPTION OF THE INVENTION

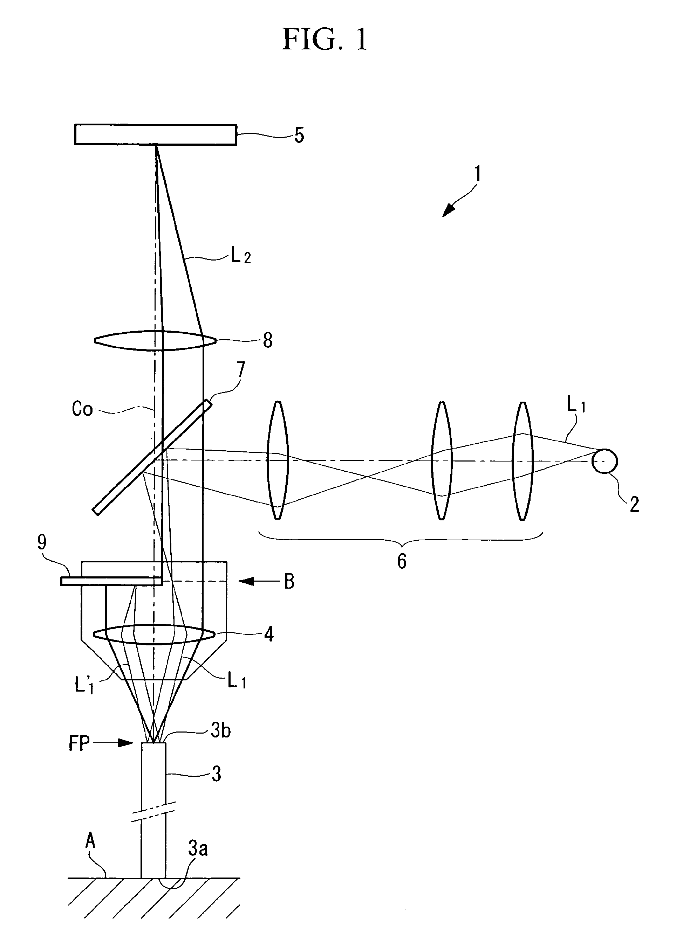

An imaging apparatus 1 according to a first embodiment of the present invention will now be described with reference to the attached drawing, FIG. 1. The imaging apparatus 1 according to this embodiment includes, as shown in FIG. 1, a light source (illumination light source) 2 emitting excitation light (illumination light) $L_1$, a rod lens (small-diameter image-transmitting portion) 3, the distal end 3a of which is placed near a specimen A, an objective lens 4 converging the excitation light $L_1$ emitted from the light source 2 to the proximal end 3b of the rod lens 3, and an image pickup device (light-detecting device) 5 that detects fluorescence light $L_2$ generated in the specimen A and returned therefrom via the rod lens 3 and the objective lens 4. The proximal end 3b of the rod lens 3 coincides with the focal plane FP of the objective lens 4.

In FIG. 1, reference numeral 6 denotes an optical illumination system, 7 denotes a dichroic mirror, and 8 denotes an image formation lens. Adding to the above, the imaging apparatus 1 according to this embodiment includes a shield member (shield portion) 9 disposed at a pupil position B of the objective lens 4 so as to cover the illumination light path on more than one side in a radial direction with respect to the optical axis $C_o$ of the objective lens 4. The image pickup device is configured with, for example, a CCD or C-MOS.

An image of the specimen A is obtained by using the imaging apparatus 1 according to this embodiment as follows. The excitation light $L_1$ emitted from the light source 2 is guided through the optical illumination system 6, reflected by the dichroic mirror 7, and made incident to the objective lens 4. Because of the shield member 9 covering more than half the optical path of the excitation light $L_1$ at near the pupil position B of the objective lens 4, the excitation light $L_1$ passes through an area not covered with the shield member 9 and is converged onto the proximal end 3b of the rod lens 3.

A part of the excitation light $L_1$ converged onto the proximal end 3b of the rod lens 3 is reflected therefrom, while another part of the excitation light $L_1$ is made incident into the rod lens 3. Reflected light $L_1'$ of the excitation light $L_1$ reflected from the proximal end 3b of the rod lens 3 is converged by the objective lens 4 as shown in FIG. 1. Since the optical path is more than half covered by the shield member 9 at near the pupil position B of the objective lens 4 in this embodiment, the reflected light $L_1'$ is substantially blocked by the shield member 9 and not returned to the side of the dichroic mirror 7.

The excitation light $L_1$ incident into the rod lens 3 propagates therethrough and is emitted toward the specimen A from the distal end 3a of the rod lens 3, which is placed near the specimen A. The excitation light $L_1$ excites a fluorescence substance existing in the specimen A to produce fluorescence light $L_2$, which returns via the rod lens 3 and the objective lens 4 along the same route as the excitation light $L_1$ passed.

The fluorescence light $L_2$ that is passed through an area not covered with the shield member 9 is further transmitted through the dichroic mirror 7 and converged on the image formation surface of the image pickup device 5 by the image formation lens 8. The image pickup device 5 can thus obtain a fluorescence image of the specimen A.

In the imaging apparatus 1 according to this embodiment, as described above, the amount of the reflected light $L_1'$ of the excitation light $L_1$ incident to the image pickup device 5 can be significantly reduced because the reflected light $L_1'$ of the excitation light $L_1$, which is reflected at the proximal end 3b of the rod lens 3, is almost entirely blocked by the shield member 9. In this arrangement, it is not necessary to dispose a flat glass plate on the proximal end 3b nor to use an oil in the space between the proximal end 3b and the objective lens 4; therefore, autofluorescene produced in a flat glass plate, an oil, or the like can be avoided. As a result, a sharp image with low noise can be obtained. Furthermore, the observation work becomes simplified due to unnecessity of handling oil.

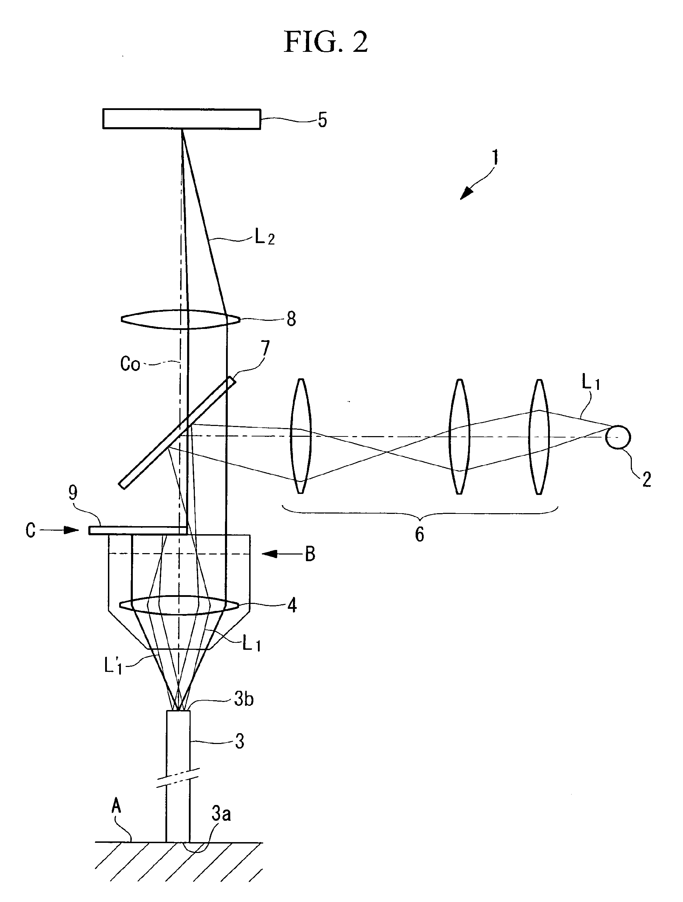

It is noted that although the rod lens 3 is used as the small-diameter image-transmitting portion in the imaging apparatus 1 according to this embodiment, an imaging fiber may be employed instead. It is also noted that although the shield member 9 is disposed at near the pupil position B of the objective lens 4, the shield member 9 may be disposed alternatively near the barrel end C of the objective lens 4 as shown in FIG. 2.

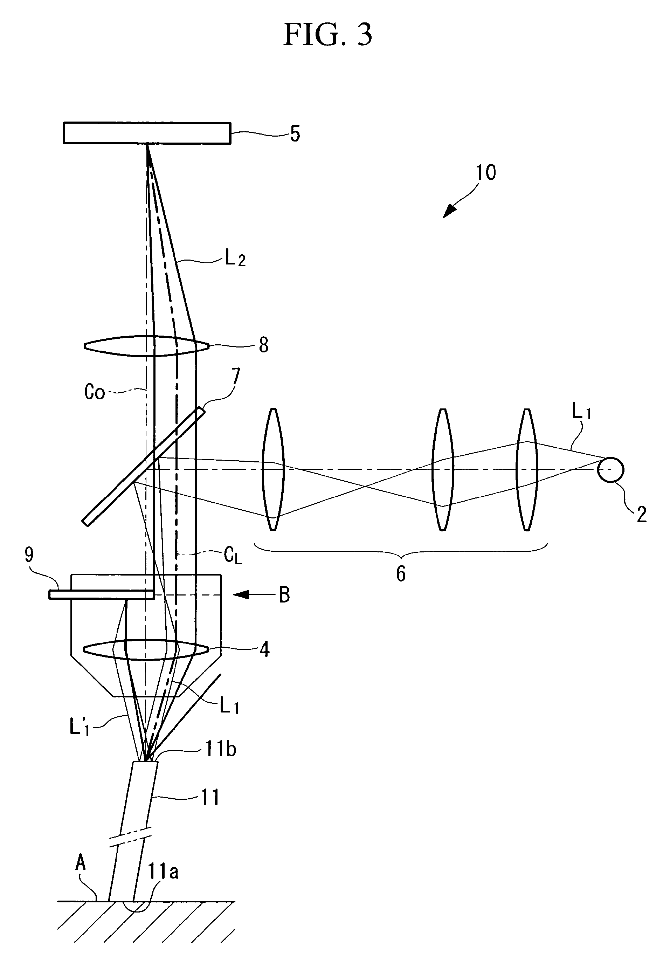

Next, an imaging apparatus 10 according to a second embodiment of the present invention will be described with reference to FIG. 3. In the description of this embodiment, constituents the same as those of the imaging apparatus 1 according the first embodiment are respectively denoted with the same reference numerals, and the explanation thereof is omitted.

The imaging apparatus 10 according to this embodiment is different from the imaging apparatus 1 according to the first embodiment in the configuration of the small-diameter image-transmitting portion. In this embodiment, the small-diameter image-transmitting portion is composed of an imaging fiber 11, and the proximal end 11b thereof to which the excitation light $L_1$ is incident is formed so as to be inclined at a predetermined angle with respect to a plane orthogonal to the optical axis of the imaging fiber 11 as shown in FIG. 3.

In this embodiment, the proximal end 11b of the imaging fiber 11 formed as described above is located at the position coincident to the focal plane FP of the objective lens 4. The inclination of the proximal end 11b of the imaging fiber 11 is set so that the optical axis (center axis) $C_L$ of light beams, propagated through the imaging fiber 11 and deflected at the proximal end 11b when emitted therefrom, passes through an area not covered with the shield member 9 disposed at near the pupil position B of the objective lens 4.

In the imaging apparatus 10 according to this embodiment, configured as described above, the same principle as present in the first embodiment is replicated; that is, the reflected light $L_1'$ of excitation light $L_1$ that is passed through an area not covered with the shield member 9 and reflected from the proximal end 11b of the imaging fiber 11 is blocked by the shield member 9. Also, the principle present in the first embodiment is replicated that the excitation light $L_1$ incident to the proximal end 11b of the imaging fiber 11 is emitted from the distal end 11a to irradiate the specimen A, and fluorescence light $L_2$ generated thereby propagates back through the imaging fiber 11.

In this embodiment, since the proximal end 11b of the imaging fiber 11 is inclined at a predetermined angle with respect to the plane orthogonal to the optical axis of the imaging fiber 11, the optical axis $C_L$ of the fluorescence light $L_2$ propagated through the imaging fiber 11 is deflected at the proximal end 11b when emitted therefrom. The deflected optical axis $C_L$ of the fluorescence light $L_2$ emitted from the proximal end 11b of the imaging fiber 11 passes through an area not covered with the shield member 9 disposed at near the pupil position B of the objective lens 4.

Accordingly, the fluorescence light $L_2$ from the specimen A is deflected in a direction to avoid the shield member 9 when emitted from the proximal end 11b of the imaging fiber 11. Consequently, much of the high-intensity part of the fluorescence light $L_2$ around its optical axis $C_L$ is converged by the objective lens 4 and transmitted to the image pickup device 5 via the dichroic mirror 7 and the image formation lens 8 without being blocked by the shield member 9. Namely, the imaging apparatus 10 according to this embodiment brings about, adding to advantages offered by the first embodiment, another advantage that a bright fluorescence image can be obtained.

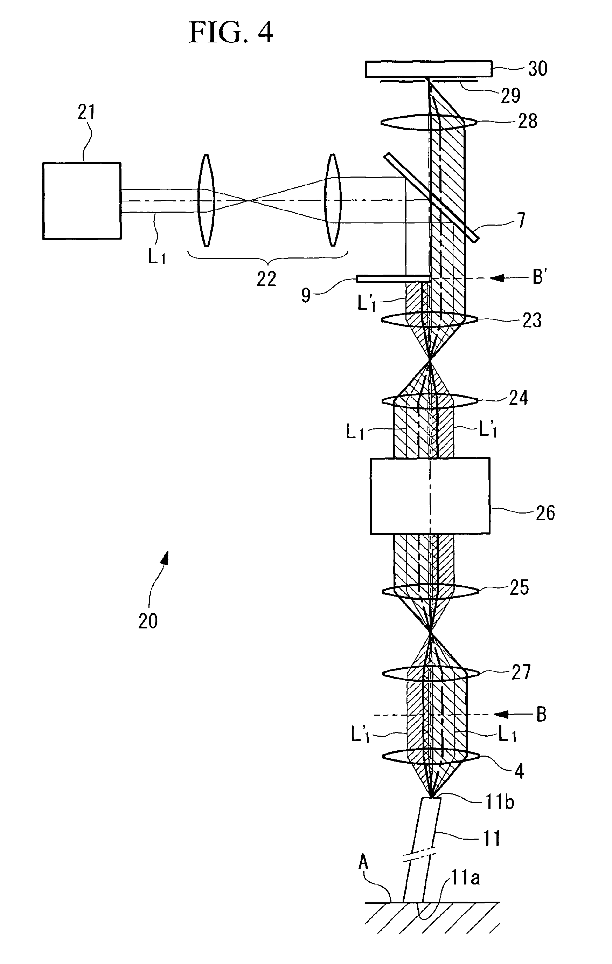

Then, an imaging apparatus 20 according to a third embodiment of the present invention will be described with reference to FIG. 4. In the description of this embodiment, constituents the same as those of the imaging apparatus 10 according the second embodiment are respectively denoted with the same reference numerals, and the explanation thereof is omitted.

The imaging apparatus 20 according to this embodiment is a confocal microscope, which as shown in FIG. 4 includes a light source 21 emitting excitation light (laser light) $L_1$, a beam expander 22 for adjusting a diameter of the ray bundle of the excitation light $L_1$, a dichroic mirror 7, relay lenses 23, 24, 25 for relaying the pupil of an objective lens 4 through which the excitation light $L_1$ and fluorescence light $L_2$ pass, a scanner 26 for two-dimensionally scanning the excitation light $L_1$ in a direction crossing the optical axis thereof, an image formation lens 27, the objective lens 4, a converging lens 28 for converging the fluorescence light $L_2$ that passes through the dichroic mirror 7, a confocal pinhole 29 disposed near the focal point of the converging lens 28, and an optical detector 30 such as a photo multiplier tube. In this embodiment, a shield member 9 is disposed at near a position B' optically conjugate with the pupil position B of the objective lens 4, the position B' being relayed by the relay lenses 23, 24, 25.

In the imaging apparatus 20 according to this embodiment, configured as described above, the excitation light $L_1$ emitted by the light source 21 is expanded by the beam expander 22, reflected by the dichroic mirror 7, and one half of the optical path thereof is blocked by the shield member 9. The excitation light $L_1$ that passes through an area not covered with the shield member 9 is relayed by the relay lenses 23, 24, two-dimensionally scanned by the scanner 26, and converged onto the proximal end 11b of a imaging fiber 11 via the relay lens 25, the image formation lens 27 and the objective lens 4.

At the proximal end 11b of an imaging fiber 11, the excitation light $L_1$ is incident from one side with respect to its optical axis and reflected toward the other side. The reflected light $L_1$' of the excitation light $L_1$ reflected from the proximal end 11b returns along the same optical path via the objective lens 4, the image formation lens 27, the relay lens 25, the scanner 26 and the relay lenses 23, 24. The reflected light $L_1$', however, is blocked by the shield member 9 disposed at near the position B' optically conjugate with the pupil position B of the objective lens 4 so as not to be transmitted to the side of the dichroic mirror 7. The shield member 9 disposed at the position B' brings about the same effect as in the second embodiment, in which it is disposed at near the pupil position B.

As with the second embodiment, since the proximal end 11b of the imaging fiber 11 is inclined at a predetermined angle with respect to the plane orthogonal to the optical axis of the imaging fiber 11, the fluorescence light $L_2$ generated in the specimen A and propagated through the imaging fiber 11 is deflected at the proximal end 11b when emitted therefrom to the direction from which the excitation light $L_1$ has been incident. Consequently, much of the fluorescence light $L_2$ passes through an area not covered with the shield member 9 that is disposed at near the position B' optically conjugate with the pupil position B, transmitted through the dichroic mirror 7, and converged by the converging lens 28; then, only the fluorescence light $L_2$ that has passed through the confocal pinhole 29 is detected by the optical detector 30.

With the imaging apparatus 20 according to this embodiment, it thus becomes possible to obtain a sharp and bright image negligibly subjected to noise caused by the reflected light $L_1$' at the proximal end 11b of a imaging fiber 11 as in the imaging apparatus 10 according to the second embodiment and/or autofluorescence. Furthermore, since the imaging apparatus 20 of this embodiment is configured with a confocal microscope, only the fluorescence light $L_2$ is detected that is generated near the distal end 11a of the imaging fiber 11 placed near the specimen A; thereby, a bright fluorescence image can be obtained.

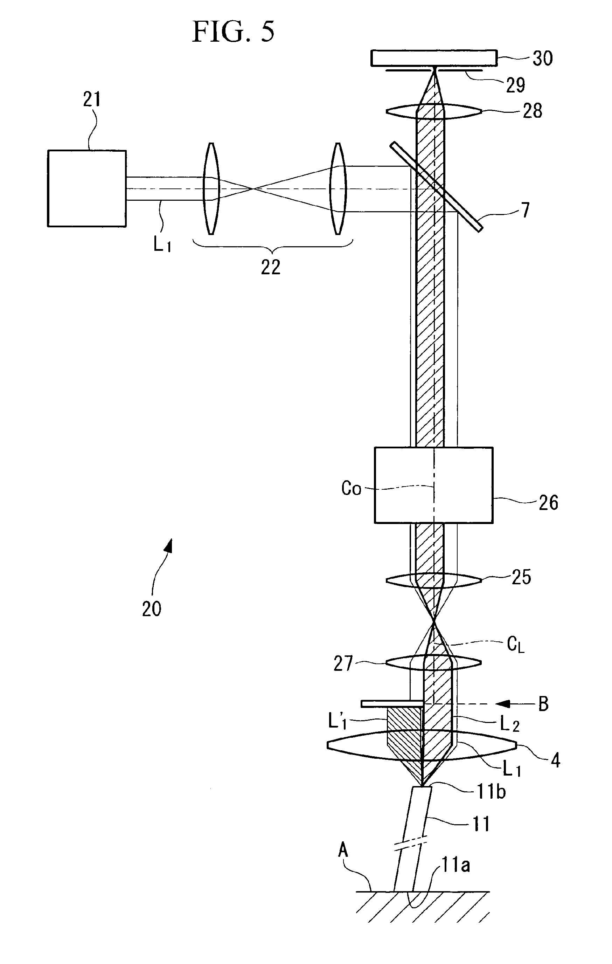

It is noted that, in this embodiment, an objective lens 4 having a large pupil diameter may be employed as shown in FIG. 5, and the optical axis $C_O$ of the relay lens 25 and the image formation lens 27 may also be decentered toward the side not covered with the shield member 9 with respect to the optical axis of the objective lens 4, by which much more fluorescence light $L_2$ could be gathered and fluorescence images delivered become brighter. In this case, the shield member 9 is disposed at near the pupil position B of the objective lens 4 as shown in FIG. 4, so it is not necessary to use the relay lenses 23, 24 for relaying the pupil position B to the position B' optically conjugate therewith.

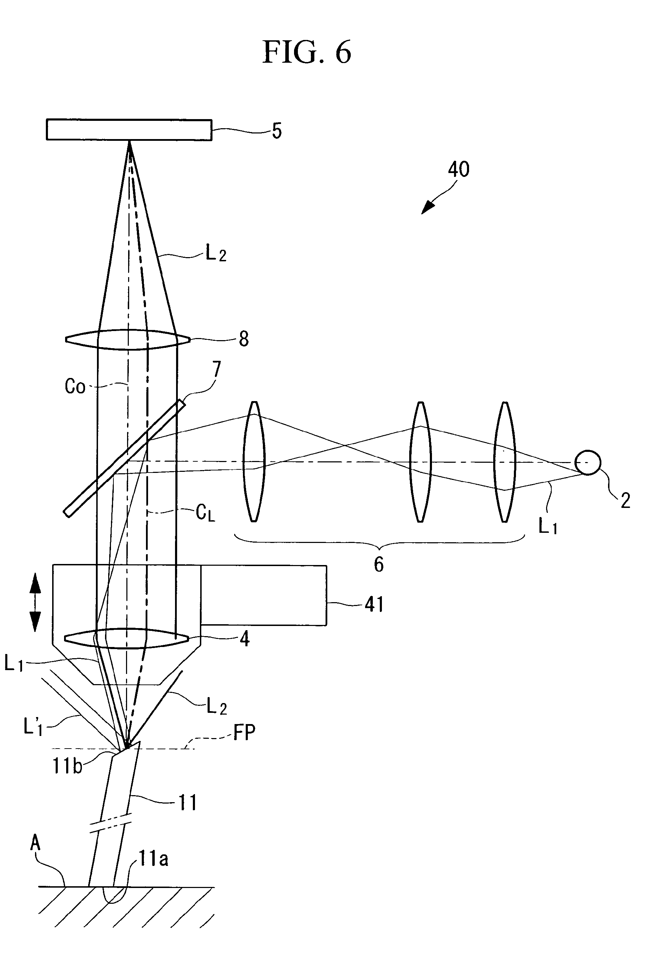

Finally, a imaging apparatus 40 according to a fourth embodiment of the present invention will be described with reference to FIG. 6. In the description of this embodiment, constituents the same as those of the imaging apparatus 10 according the second embodiment are respectively denoted with the same reference numerals, and the explanation thereof is omitted.

The imaging apparatus 40 according to this embodiment is different from the imaging apparatus 10 according to a second embodiment in such points that the proximal end 11b of the imaging fiber 11 inclined with respect to the plane orthogonal to the optical axis thereof is disposed so as to be also inclined with respect to the focal plane FP of the objective lens 4; the shield member 9 is not provided; a piezoelectric element (oscillating portion) 41 is included by which the objective lens 4 is oscillated along its optical axis; and an image composing portion (not shown) is also included which composes an fluorescence image on the basis of information from the piezoelectric element 41 on the position of the objective lens 4 and optical signal obtained by an image pickup device 5.

The proximal end 11b of the imaging fiber 11 is disposed so that the reflected light $L_1$'of excitation light $L_1$, emitted from a light source 2 and converged by the objective lens 4, is directed not toward the objective lens 4. The orientation of the imaging fiber 11 and the inclination of the proximal end 11b are set so that the optical axis $C_L$ of fluorescence light $L_2$ passes through the objective lens 4, the fluorescence light $L_2$ being generated in a specimen A, propagates through the imaging fiber 11, and is deflected at the proximal end 11b when emitted therefrom.

Since the proximal end 11b of the imaging fiber 11 and the focal plane FP of the objective lens 4 are inclined with respect to each other, only the fluorescence light $L_2$ emitted from a point on the straight line at which both planes cross each other can be detected by the image pickup device 5 as a focused image, while the fluorescence light $L_2$ emitted from the other area is not delivered as a focused image, if the positions of both planes are fixed.

For this reason, the focal plane FP of the objective lens 4 is made to shift along the optical axis of the objective lens 4 by oscillating the objective lens 4 using the piezoelectric element 41; the straight line on which a point delivers a focused image is thereby moved along the proximal end 11b of the imaging fiber 11. Consequently, it becomes possible to obtain a focused image from any point in the desired area of the proximal end 11b of the imaging fiber 11, and focused fluorescence images in plane can be delivered at every instant to respective pixels of the image pickup device 5.

The image composing portion composes a two-dimensional fluorescence image by accumulating information from the piezoelectric element 41 on relative positions of the objective lens 4 and the proximal end 11b of the imaging fiber 11 along the optical axis, and the focused fluorescence images obtained by the image pickup device 5 at respective positions corresponding to the relative position information.

With the imaging apparatus 40 according to this embodiment, as described above, it becomes possible to obtain an image negligibly subjected to noise caused by the reflected light $L_1$' at the proximal end11b of the imaging fiber 11 and/or autofluorescence without using a shield member 9. Moreover, because the pupil position B is not covered with a shield member 9, fluorescence light $L_2$ emitted from the proximal end 11b of the imaging fiber 11 can be effectively collected without being discarded, which brings an advantage that a bright fluorescence image can be obtained. Incidentally, use of a shield member 9 brings about an effect, for example, that undirected light like diffused light from a fiber end can be cut off.

**Claims**

1. An imaging apparatus comprising:

    an illumination light source emitting illumination light;
    a small-diameter image-transmitting portion, a distal end of which is disposed near a specimen;
    an objective lens through which illumination light emitted from the illumination light source is incident to an incident end of the small-diameter image-transmitting portion; and
    a light-detecting portion that detects light returned from the specimen via the small-diameter image-transmitting portion and the objective lens,

    wherein a shield portion partially blocking the illumination light is disposed at near a pupil position of the objective lens or near a position optically conjugate with the pupil position so as to cover the illumination light path on one side in a radial direction with respect to the optical axis of the objective lens.

2. The imaging apparatus according to Claim 1,
    wherein the proximal end of the small-diameter image-transmitting portion is formed so as to be inclined at a predetermined angle with respect to the plane orthogonal to the optical axis thereof, and is located at the position coincident to the focal plane of the objective lens, the predetermined angle being determined so that the optical axis of light beams emitted from the proximal end passes through an area not covered with the shield portion disposed at near the pupil position of the objective lens or near the position optically conjugate with the pupil position.

3. An imaging apparatus comprising;

    an illumination light source emitting illumination light;
    a small-diameter image-transmitting portion, a distal end of which is disposed near a specimen;
    an objective lens through which illumination light emitted from the illumination light source is incident to an proximal end of the small-diameter image-transmitting portion;
    a light-detecting portion that detects light returned from the specimen via the small-diameter image-transmitting portion and the objective lens;
    an oscillating portion that varies the relative position of the objective lens and the proximal end of the small-diameter image-transmitting portion along an optical axis; and
    an image composing portion that composes an image on the basis of information on relative positions of the objective lens and the proximal end of the small-diameter image-transmitting portion along the optical axis and optical signal from the specimen detected by the light-detecting portion,
    wherein the proximal end of the small-diameter image-transmitting portion is formed so as to be inclined at a predetermined angle with respect to the plane orthogonal to the optical axis thereof, and is disposed so as to be inclined with respect to the focal plane of the objective lens.

4. The imaging apparatus according to any one of Claims 1 to 3, wherein the small-diameter image-transmitting portion is an optical fiber or a rod lens of gradient index type.

# FIG. 1

# FIG. 2

# FIG. 3

# FIG. 4

# FIG. 5

# FIG. 6

**European Patent Office**

## EUROPEAN SEARCH REPORT

Application Number

EP 07 00 7879

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 813 987 A (MODELL MARK [US] ET AL) 29 September 1998 (1998-09-29) * column 16, line 66 - column 19, line 22; figure 4a * | 1,2 | INV. G12B21/06 G02B5/00 |
| A | GOBEL W ET AL: "Miniaturized two-photon microscope based on a flexible coherent fiber bundle and a gradient-index lens objective" OPTICS LETTERS OPT. SOC. AMERICA USA, vol. 29, no. 21, 1 November 2004 (2004-11-01), pages 2521-2523, XP002450065 ISSN: 0146-9592 * figure 1 * | 1-4 | |
| A | WO 01/69302 A (GENOSPECTRA INC [US]; CHEN SHIPING [US]) 20 September 2001 (2001-09-20) * figures 1a,1b * | | |
| A | L.GINIUNAS ET AL.: "Scanning fiber-optic microscope for microendoscopy with gradient index lenses probe" SPIE OPTICAL FIBERS IN MEDICINE VIII, vol. 1893, 20 May 1993 (1993-05-20), - 1993 pages 90-92, XP002444242 | | **TECHNICAL FIELDS SEARCHED (IPC)** G02B |
| D,A | US 6 370 422 B1 (RICHARDS-KORTUM REBECCA [US] ET AL) 9 April 2002 (2002-04-09) | | |
| A | US 4 877 966 A (TOMEI L DAVID [US] ET AL) 31 October 1989 (1989-10-31) | | |

The present search report has been drawn up for all claims

| Place of search | Date of completion of the search | Examiner |
|---|---|---|
| The Hague | 12 September 2007 | Verbandt, Yves |

EPO FORM 1503 03.82 (P04C01)

**ANNEX TO THE EUROPEAN SEARCH REPORT
ON EUROPEAN PATENT APPLICATION NO.**

EP 07 00 7879

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2007

| Patent document cited in search report | | Publication date | Patent family member(s) | | Publication date |
|---|---|---|---|---|---|
| US 5813987 | A | 29-09-1998 | NONE | | |
| WO 0169302 | A | 20-09-2001 | AU | 4362701 A | 24-09-2001 |
| | | | CA | 2401511 A1 | 20-09-2001 |
| | | | EP | 1264168 A2 | 11-12-2002 |
| | | | JP | 2004500572 T | 08-01-2004 |
| US 6370422 | B1 | 09-04-2002 | NONE | | |
| US 4877966 | A | 31-10-1989 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006123587 A
- JP 2005512746 W
- US 6370422 B